# EUROPEAN PATENT APPLICATION

(11) **EP 2 858 254 A1**
(43) Date of publication of application: **08.04.2015**
(21) Application number: 14003434.9
(22) Date of filing: 07.10.2014
(51) Int. Cl.: H04B 1/3888

(54) **Protective case for an electronic device**

(30) Priority: 07.10.2013 US 201361887826 P
(71) Applicant: Thule Organization Solutions, Inc., Longmont CO 80503-7294 (US)
(72) Inventor: Burgess, Andrew A., Boulder, CO 80304 (US); O'Rourke, Ken, 403 Taichung City (TW)
(74) Representative: Wallentin, Lars

(57) **Abstract**

A protective case for accommodating at least one electronic device is provided. The case comprises internal features including device securing and shock protection features provided in one or more corners of the case.

## Description

### FIELD OF THE INVENTION

The present invention relates generally to protective cases and covers for electronic devices. More specifically, the present invention relates to a protective case for accommodating a variety of electronic devices, such as smartphones and tablets.

### BACKGROUND

Portable electronic devices such as smart phones, tablet computers and e-readers have become increasingly popular. An inherent convenience of these devices is that they are highly portable. With increased portability and enhanced electronics, however, comes the need to protect the device from the surrounding environment, impact, and abrasion. Accordingly, as the popularity of the devices continues to increase, so does the need and desire to protect or surround the device with a cost effective storage case. There is a need not only for protecting and transporting electronic devices, but also to accommodate devices of varying sizes, shapes, and having various different features and controls.

### SUMMARY OF THE INVENTION

Accordingly, the present invention contemplates a novel system and device for a protective case for an electronic device wherein the case is provided with features for accommodating and retaining a variety of electronic devices of various shapes and/or sizes.

Known devices for receiving and protecting smartphones and similar items provide a one-piece co-formed hard shell case for surrounding a smartphone. U.S. Patent 8,204,561 to Mongan et al., which is hereby incorporated by reference in its entirety, discloses one such case wherein elastomer is provided in the corners of the case to provide shock protection. Such devices, however, fail to provide various novel features of the present invention including various features for securing and protecting a device while still allowing for a preferred level of access to the device.

In various embodiments, the present invention comprises a co-molded case wherein two or more materials are co-molded or otherwise joined to form a single-piece case for receiving a personal electronic device. For example, in one embodiment, a substantially rigid plastic material and a substantially elastic rubber material are co-formed or co-molded to produce a one piece case having benefits of both materials.

In one aspect, the present invention comprises a protective case for retaining, displaying, and storing an electronic device, the case comprising electronic device-receiving features for protecting the device from impact and shock as well as helping retaining the device in a desired position within the case.

In various aspects, protective cases of the present invention comprise various protective features including, but not limited to, rigid or hard-shell outer covers, cushioned materials, soft or non-abrasive interior portions to reduce risk of abrasion, etc.

In one embodiment, a case is provided for securing a device, such as a smartphone. The case comprises various apertures and features for allowing access to pre-existing features of a device. The case comprises at least two materials, a first material comprising a flexible material for allowing selective manipulation of the case (for example, to allow insertion and removal of a device) and providing impact protection. A second material comprises a substantially rigid material for protecting the device from impact and abrasion and providing a sufficient amount of rigidity to the case. For example, the substantially rigid portion may be provided along a rear-central portion of the case.

In certain embodiments, cases of the present invention comprise low-profile peripheral edges which allow for greater access to a touch screen of a smartphone, for example. Additionally, it is contemplated that embodiments further comprise novel corner-features internal to the case to help secure a smartphone and protect the smartphone from shock, particularly in embodiments where the peripheral edge has been reduced to allow for enhanced access.

In various embodiments, corner-features comprise one or more elastic or partially-elastic materials including, for example, rubber, nitrile rubber, vinyl, calendared vinyl, cast vinyl, silicone, leather, polyurethane, polyethylene, thermoplastic polyurethane, and various combinations thereof.

In certain embodiments, shock protection is enhanced by provided spaced apart corner-features such that adjacent corner features of various construction are allowed to collapse and contact each other in an accordion-like fashion if and when an impact is experienced. Comer-features may be somewhat compressed upon insertion of a device or phone to be stored within the case. Preferably, however, corner-features are not fully compressed upon inserting the phone, and some deformation or strain of the features is still permitted when the phone is inserted such that the features are adapted and suited to absorb an impact. In one embodiment, a case is contemplated, the case comprising a substantially rigid or non-elastic plastic material and further comprising one or more corner-features comprising thermoplastic polyurethane to enhance shock protection properties of the case.

### BRIEF DESCRIPTION OF THE DRAWINGS

The accompanying drawings, which are incorporated in and constitute a part of the specification, illustrate embodiments of the disclosure and together with the general description of the disclosure given above and the detailed description of the drawings given below, serve to explain the principles of the disclosures.

It should be understood that the drawings are not necessarily to scale. In certain instances, details that are not necessary for an understanding of the disclosure or that render other details difficult to perceive may have been omitted. It should be understood, of course, that the disclosure is not necessarily limited to the particular embodiments illustrated herein.
Fig. 1 is a front perspective view of a case according to one embodiment;
Fig. 2 is a partial cross-sectional elevation view of one embodiment of the present invention;
Fig. 3 is a partial cross-sectional elevation view of one embodiment of the present invention;
Fig. 4 is a partial cross-sectional elevation view of one embodiment of the present invention;
Fig. 5 is a partial cross-sectional elevation view of one embodiment of the present invention;
Fig. 6 provides various bottom perspective views of embodiments of the present invention;
Fig. 7 provides various rear elevation views of embodiments of the present invention;
Figs. 8A-8H provide various side elevation views of embodiments of the present invention;
Figs. 9A-9B provide front elevation view of embodiments of the present invention;
Fig. 10A provides a partial cut-away perspective view of one embodiment of the present invention;
Fig. 10B provides a partial cut-away elevation view of one embodiment of the present invention;
Fig. 11A provides a partial cut-away perspective view of one embodiment of the present invention;
Fig. 11B provides a partial cut-away elevation view of one embodiment of the present invention;
Fig. 12A provides a partial cut-away perspective view of one embodiment of the present invention;
Fig. 12B provides a partial cut-away elevation view of one embodiment of the present invention;
Fig. 13 is a front perspective view of one embodiment of the present invention;
   and
Fig. 14 is a rear elevation view of one embodiment of the present invention.

Appendix A, which is provided herewith and incorporated by reference in its entirety, discloses various additional details of the present invention. No limitation of the invention with respect to Appendix A is provided herewith. Appendix is submitted purely for the additional description and disclosure of certain embodiments.

### DETAILED DESCRIPTION

The present invention has significant benefits across a broad spectrum of endeavors. It is the applicant's intent that this specification and the claims appended hereto be accorded a breadth in keeping with the scope and spirit of the invention being disclosed despite what might appear to be limiting language imposed by the requirements of referring to the specific examples disclosed. To acquaint persons skilled in the pertinent arts most closely related to the present invention, a preferred embodiment of the method that illustrates the best mode now contemplated for putting the invention into practice is described herein by, and with reference to, the annexed drawings that form a part of the specification. The exemplary method is described in detail without attempting to describe all of the various forms and modifications in which the invention might be embodied. As such, the embodiments described herein are illustrative, and as will become apparent to those skilled in the arts, can be modified in numerous ways within the scope and spirit of the invention.

The detailed description is to be construed as exemplary only and does not describe every possible embodiment since describing every possible embodiment would be impractical, if not impossible. Numerous alternative embodiments could be implemented, using either current technology or technology developed after the filing date of this application.

Embodiments of the present invention accommodate a wide variety of devices, such as smartphones, particularly those comprising generally planar multi-purpose touch screens. While various embodiments shown and described herein are well suited for housing a smartphone, smaller and larger versions of the protective case are contemplated that are adapted for housing or protecting various devices, such as tablets, e-readers, and various similar devices whether or not currently conceived of.

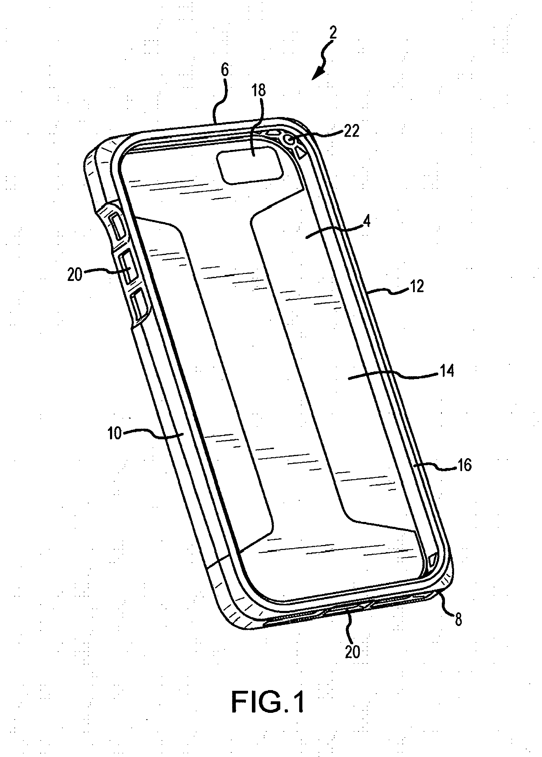

Fig. 1 is a front perspective view of one embodiment of a case 2. The case 2 comprises a substantially rectangular case for receiving a device of similar construction and/or dimensions. The case 2 comprises a plurality of opposing sidewalls, including top 6, bottom 8, left 10 and right 12 sidewall portions. The sidewall portions in combination with a back panel portion 4 provide for an internal storage volume 5 adapted to receive substantially all of a device (not shown) and protect the same. In various embodiments, the case 2 comprises a plurality of access features 18, the access features 18 adapted for allowing access to portions of a stored device including, but not limited to, volume control(s), headphone port(s), power/USB connection(s), speaker(s), on/off control(s), and similar features common to smartphones and similar devices. The case 2 comprises a peripheral lip 14 for securing a device within the internal storage volume 5 of the case and preventing undesired displacement of the device. The back panel portion 4 of the case 2 preferably comprises an imaging aperture 16 for revealing and providing access to pre-existing imaging equipment on a device, such as a lens and flashbulb provided on the device. In various embodiments, the imaging aperture 16 is sized and shaped to accommodate the specific dimensions and features of a specific device.

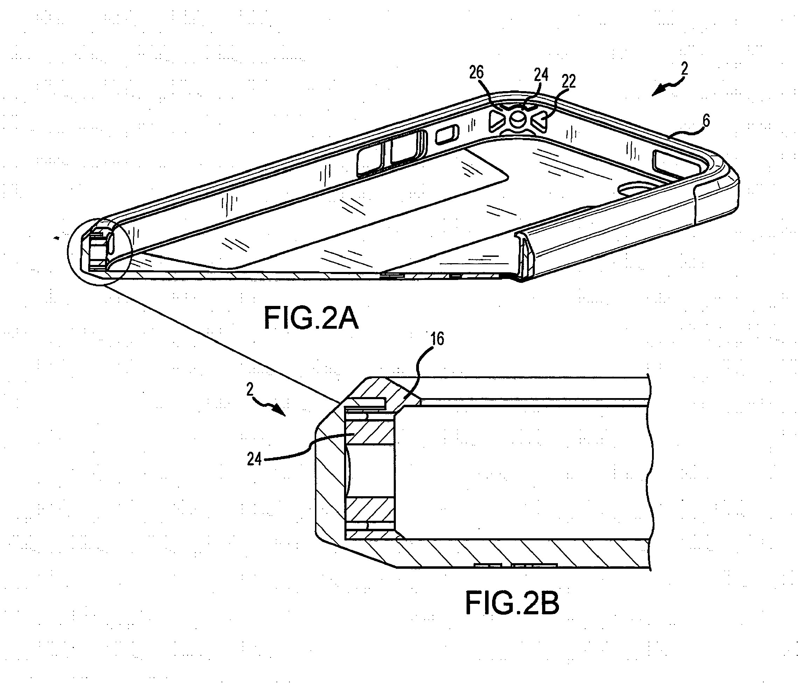

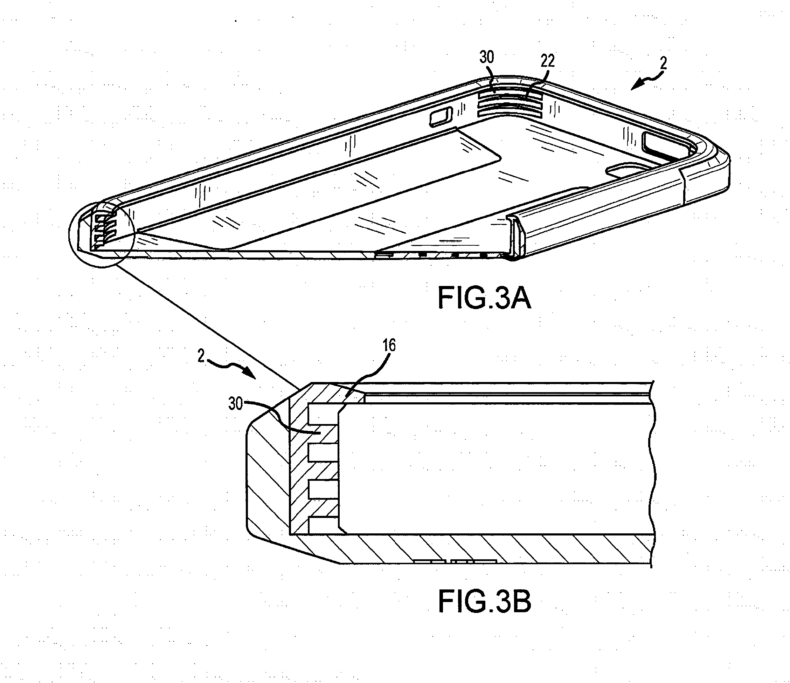

Figs. 2-4 are cross-sectional elevation views of cases 2 according to embodiments of the present invention. As shown, a device 20 is provided within the internal volume of the case 2. The cross-sectional showing of the case 2 omits the bottom portion 8 of the case 2 such that the device 20 is visible. The back panel portion 4 and right sidewall portion 12 are shown as partially surrounding the device 20. The embodiment of Fig. 2 depicts a "lip-less bezel" embodiment, wherein the peripheral lip 14 extends over a portion of the front of the device 20, and wherein a single tier 24 of the lip 14 is provided. Fig. 3 depicts an alternative embodiment wherein a "thin-lip bezel" is contemplated. As shown, the peripheral lip 14 of Fig. 3 comprises a two-tier 26 arrangement wherein the lip 14 extends over a first portion (e.g. body portion) and a second portion (e.g. screen portion) of the device 20.

In various embodiments, side portions of the case 2 comprise tapered or beveled edges. Tapered edges provide for novel features of the present invention including, for example, a reduced case size, a reduced perceived size-in-hand, facilitation of inserting and withdrawing a phone from pants' pockets, etc., without a significant reduction in the impact-protection properties provided by the case 2. Fig. 13 depicts one such embodiment wherein at least side portion 10, 12 comprise a tapered or beveled feature.

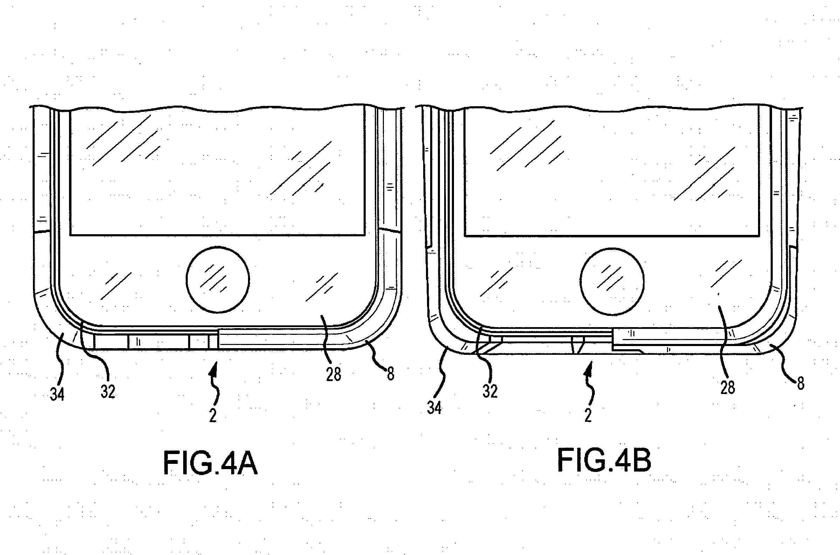

Fig. 4 depicts the case 2 of Fig. 2 comprising a lip-less bezel, wherein various device operations are facilitated by the structure of the case 2. For example, a swiping motion of a user's hand 22 is facilitated by the lip-less bezel embodiment as the screen of the device 20 remains substantially unimpeded by the structure of the case 2. Side wall portion 10, 12 provide protection to sides of the device 20, and the structure of the peripheral lip 14 is such that full access to a screen of the device 20 is provided. Although Fig. 4 depicts the embodiment of Fig. 2 and the one-tier lip 24, it will be expressly recognized that device operation features as shown in Fig. 4 are also enabled by various embodiments shown and described herein, including the embodiment of Fig. 3. That is, ease of device 20 operations is not limited to the embodiment of Figs. 2 and 4.

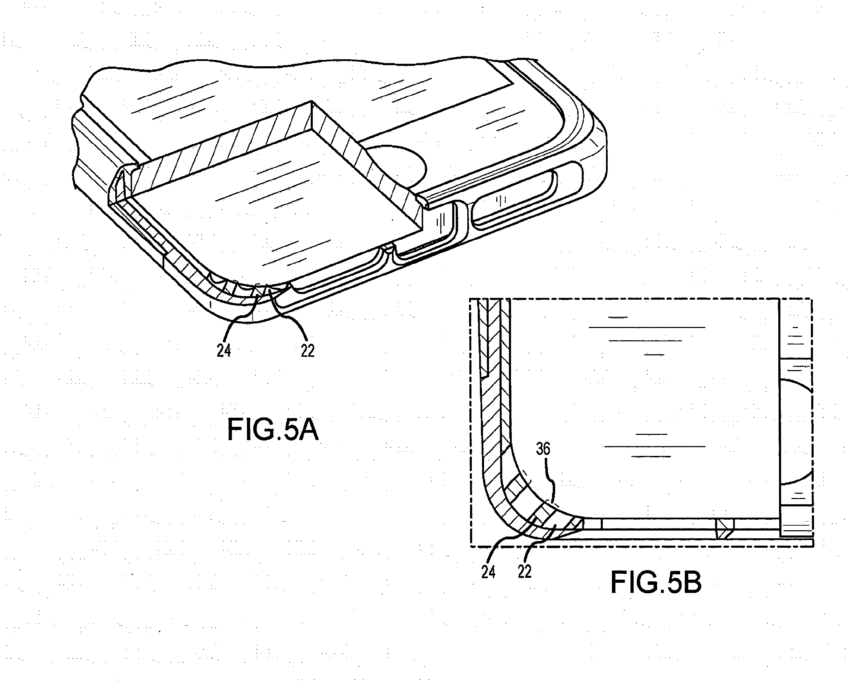

Fig. 5 is a cross-sectional view depicting various exemplary dimensions of a case 2 of one embodiment of the present invention. As shown, the case 2 comprises a lip-less bezel arrangement 24. Dimensions are provided in connection with Fig. 5 for illustration purposes only, and no limitation with respect to dimensions of cases according to the present invention are provided herewith.

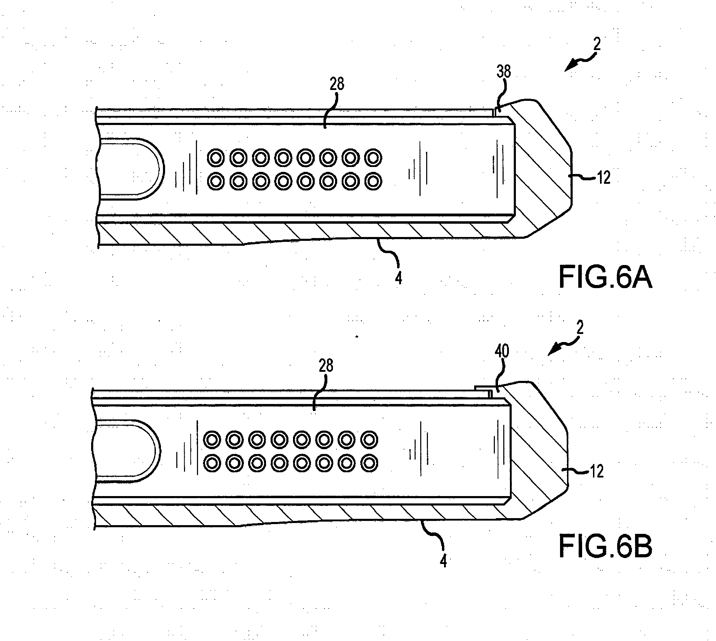

Fig. 6 provides bottom plan views and corresponding bottom perspective views of various embodiments of the present invention. As shown, devices 28, 32 may be formed to custom fit various different devices. For example, cases of the present invention comprise an array or combination of access features 18 to accommodate a specific set of features provided on a pre-existing phone or similar device when the phone is retained within an internal storage volume 5 of the case. Imaging apertures 16 are also provided therein.

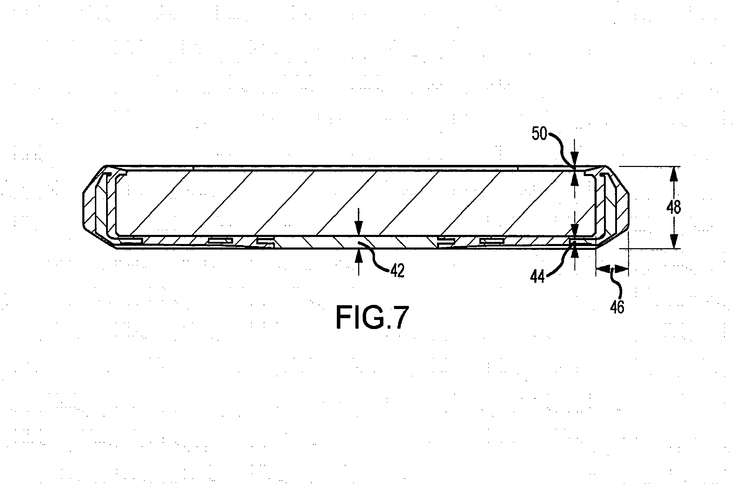

Fig. 7 provides various rear elevation views of portions of different embodiments of the present invention. As shown, however, the devices comprise similar features of varying structure and dimension. For example, an imaging aperture 16 is provided on each of the cases, but the imaging apertures 16 comprise slightly different shapes, dimensions, and/or orientations to accommodate for device-specific features or styling needs. Similarly, a device control-access feature 38 is provided on each of the cases, but the size, shape and orientation of the feature 38 may be varied.

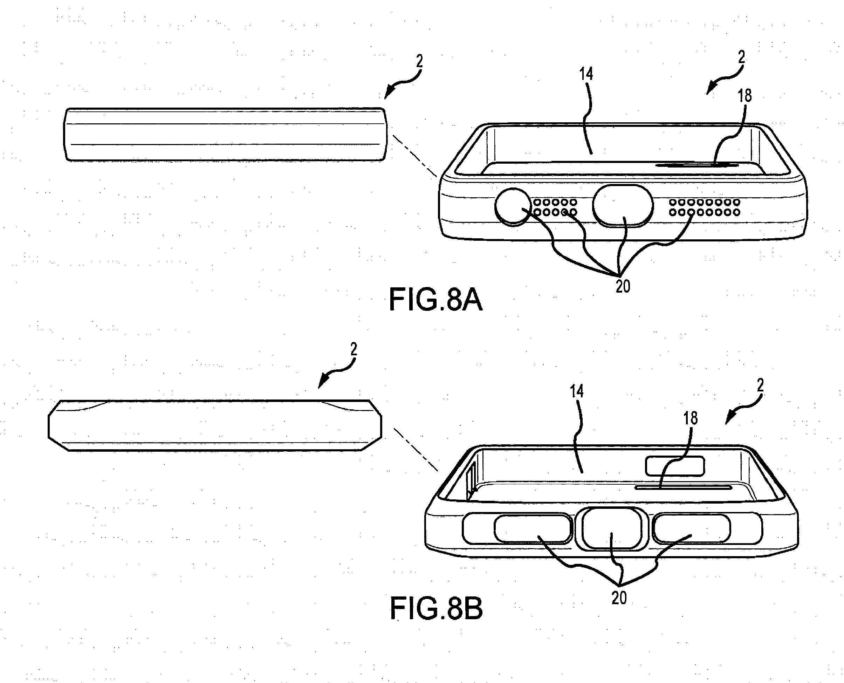

Figs. 8A-8E provide side elevation views of various different embodiments of cases 40, 42, 44, 46, 48, 50 of the present invention. As shown in Figs. 8C-8H, embodiments of the present invention comprises cases 2 with beveled edges. For example, various embodiments comprise side portions comprising a first bevel 82 and a second bevel 84 separated by a planar portion 80 that is substantially perpendicular to a screen of a device or phone housed within the case. Beveled portions 82, 84 provide for novel features of the present invention including, for example, a reduced case size, a reduced perceived size-in-hand, facilitation of inserting and withdrawing a phone from pants' pockets, etc., without a significant reduction in the impact-protection properties provided by the case.

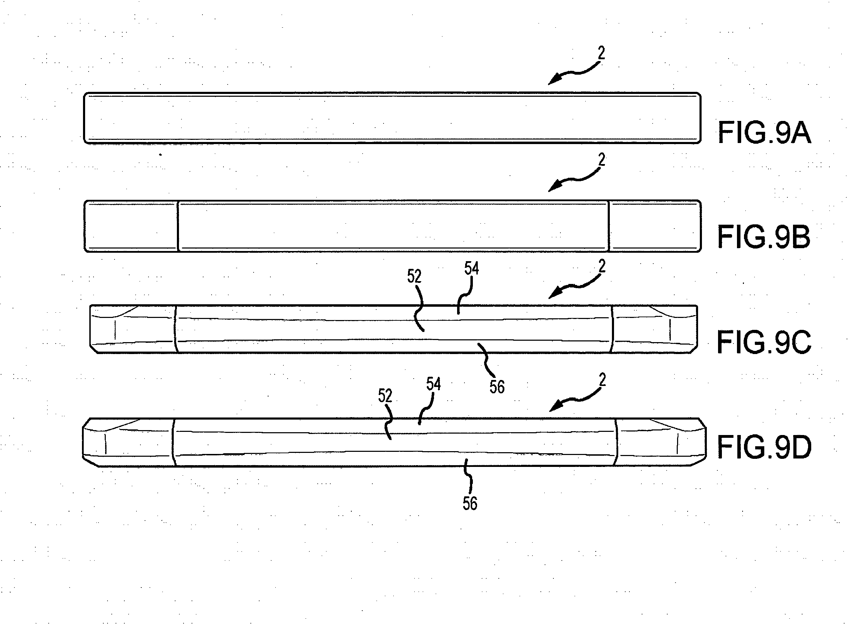

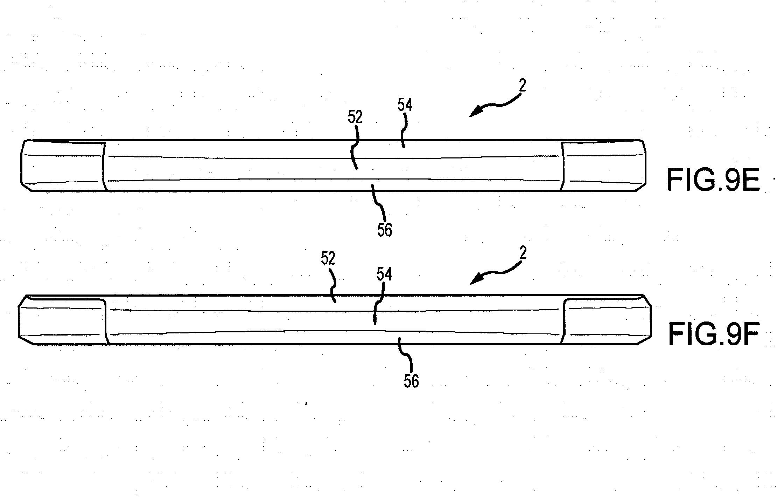

Figs. 9A-9B provide detailed views of corner portions 52, 54 of cases 42, 48 according to the embodiments depicted in Figs. 8B and 8E, respectively. Fig. 9A provides an embodiment comprising a corner portion 52 with a constant wall thickness that generally follows the front-view profile of the device 20. Fig. 9B provides an embodiment comprising a corner portion 54 wherein the corners of the case 48 extend outward beyond the profile of the device 20 to provide additional space for retaining features, the retaining features also providing the benefit of increased shock and corner-impact protection.

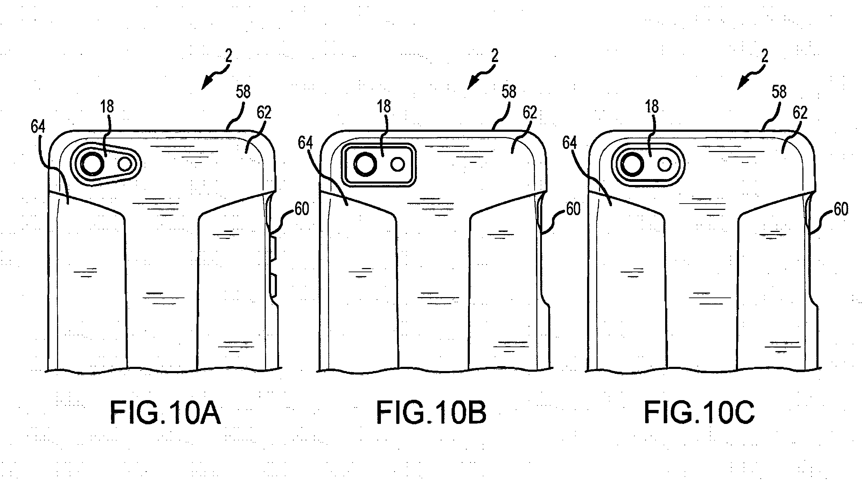

Fig. 10A is a partial cutaway view of a case 48 comprising inwardly extending dampening members 56 for securing a device 20. In various embodiments, including embodiments comprising a lipless bezel or a thin-lip bezel (see, e.g., Figs. 2 and 3), the reduction of material in the bezel or peripheral portion provides enhances access and usability. The present invention further contemplates inwardly extending dampening members for maintaining a device 20 within a case and protecting the device 20.

As shown in Fig. 10B, dampening members 56 are provided in at least one corner of the case. Top, bottom 8, left, and right sidewalls may generally correspond to the outer dimensions of a phone or electronic device. In certain embodiments, dampening members 56 extend inwardly at a radius slightly smaller than a corner radius of a smartphone to be housed, thus creating a compression fit or pressure points 57 between the case and phone. When the smartphone is inserted into the internal volume 5 of the case 2, a compression fit is provided with the device or smartphone and the case 2. Preferably, however, dampening members 56 are not so compressed by the smartphone that their dampening effects are negated. In other words, the dampening members 56 range of motion or ability to define in compression is not exhausted by fitting the phone into the case. Rather, some elastic deformation is still possible if and when the case 2 and phone experience an impact.

Figs. 11A-11B provide partial cross-sectional perspective views of a case 2 comprising dampening members 58, the dampening members 58 comprising parallel ribs. Although three dampening members 58 are shown, it will be recognized that the present invention is not limited to any particular number of these members 58. Dampening members 58 are preferably provided in each of the four corners of the case 2. However, in alternative embodiments, as few as one or two corners are provided with members 58. The dampening members 58 comprise an at least partially elastic material, such as rubber or similar material suitable for protecting a personal electronic device. Dampening members 58, extend inwardly to provide compression between the device 20 and the dampening member 58. Such a tolerance fit for the corners of the case provides a secure connection between the case and the device. Such features reduce the need for additional securing features, such as a peripheral lip that extends over the screen or front surface of a device to an unnecessary degree.

Figs. 12A-12B provide partial cross-sectional perspective views of a case 2 comprising cylindrical dampening members 60. Dampening members 60 are preferably provided in each of the four corners of the case 2. However, in alternative embodiments, any number of corners, including just one corner, is/are provided with dampening members 60. The dampening members 60 comprise an at least partially elastic material, such a rubber or similar material suitable for protecting a personal electronic device. As shown in Figs. 11A-12B, a peripheral lip 14 is provided and extends over at least a portion of a device 20 housed within the case 2. The peripheral lip 14 and dampening members 58, 60 act in concert to secure a device 20 within the volume of the case 2 and prevent undesired removal or dislocation of the device 20.

As shown in Fig. 12A, dampening members 60 according to certain embodiments comprise a suspended cylinder. In one embodiment, the cylinder 61 comprises a hollow cylinder supported by radially extending supports 63. The dampening member 60 is formed from the flexible portion of the case. In certain embodiments, the dampening members 60 comprise at least one cylinder 61, the cylinder comprising a longitudinal axis provided substantially parallel to a plane of a planar screen of an electronic device 20 when the electronic device 20 is provided within the case.

Fig. 13 is a front perspective view of a case 2 according to one embodiment of the present invention. The case 2 is shown devoid of a phone or similar device housed therein. Accordingly, dampening members 60 are shown. In certain embodiments, dampening members 60 extend inwardly to create an interference fit with a device such as a smart phone. For example, in certain embodiments, substantially planar interior portions of the side walls 6, 8, 10, 12, may generally correspond to the dimensions of a predetermined smartphone. Dampening members 60, however, are no greater than the outer dimensions of the dimensions of the predetermined smartphone and, in certain embodiments, extending inwardly at a radius slightly smaller than the smartphone. Thus, when the smartphone is inserted into the internal volume 5 of the case 2, a compression fit is provided with the device or smartphone and the case 2. Preferably, however, dampening members 60 are not so compressed by the smartphone that their dampening effects are negated. In other words, the dampening members 60 range of motion or ability to define in compression is not exhausted by fitting the phone into the case. Rather, some elastic deformation is still possible if and when the case 2 and phone experience an impact.

Fig. 14 is a rear elevation view of a case 2 according to one embodiment of the present invention. As shown, the case 2 comprises a plurality of sections 70, 72 wherein the portions 70, 72 comprise a different material and/or hardness. For example, in one embodiment, a flexible portion 70 is provided integral to a substantially rigid portion 72. The combination of materials provides for the ability to deform the case 2 in certain regions (e.g. the flexible portion 70) and facilitate insertion and removal of a device. A substantially rigid portion 72 is further provided to give structure and support to certain areas of the case 2, such as exterior corner portions 74 and central longitudinal portion 76 of the case 2. In one embodiment, the flexible portion 70 comprises SEBS styrenic block thermoplastic elastomer and the substantially rigid portion 72 comprises a polycarbonate hard structure. As shown in Fig. 13, the flexible portion 70 extends to interior corner portions of the device to provide dampening members 60 for communication with a smartphone or similar device.

In various embodiments, cases of the present invention comprise multiple part construction. For example, it is contemplated that a case 2 comprises a first material forming certain portions of the case, such as a plastic forming the top portion 6 of the device, and a second material forming additional portions of the case 2, such as a rubber material forming the impact feature(s) 60 of the device. The different materials may be inlaid or co-molded to form the appropriate combination of materials.

## Claims

1. A case for a personal electronic device comprising:
a flexible portion for receiving and retaining the personal electronic device;
the flexible portion comprising sidewalls for receiving side surfaces of the personal electronic device;
an internal storage volume configured to accept and retain the inserted personal electronic device;
a substantially rigid portion interconnected with the flexible portion to form a one-piece assembly; and
wherein the flexible portion comprises dampening members adapted to protect the electronic device from impact and to prevent inadvertent removal of the device from the case; and
wherein the dampening members comprise at least one cylinder, said cylinder comprising a longitudinal axis provided substantially parallel to a plane of a planar screen of the electronic device when the electronic device is provided within the case.

2. The case of claim 1, wherein the case comprises a rectangular case having a predetermined volume.

3. The case of claim 1, wherein the dampening members are provided in four corners of the rectangular case.

4. The case of claim 1, wherein the dampening members comprise parallel ribs.

5. The case of claim 1, wherein the case comprises an SEBS styrenic block thermoplastic elastomer and a polycarbonate.

6. The case of claim 1, wherein an outer portion of the case comprises a substantially rigid material and an interior portion of the case proximal a stored device comprises a substantially elastic material.

7. The case of claim 1, wherein internal corners of the case comprise at least one of rubber, nitrile rubber, silicone, thermoplastic polyurethane, and polyurethane, and the case further comprises a substantially rigid plastic.

8. The case of claim 1, wherein a dampening member defines an internal radius of curvature of a corner of the case, the internal radius of curvature being less than a radius of curvature of a corner of the personal electronic device.
